Europäisches Patentamt

European Patent Office

Office européen des brevets

(19)

(11) Veröffentlichungsnummer: **0 324 103 B1**

## EUROPÄISCHE PATENTSCHRIFT

(45) Veröffentlichungstag der Patentschrift: **09.12.92**

(51) Int. Cl.⁵: **B60T 8/48**, B60T 8/42

(21) Anmeldenummer: **88120317.8**

(22) Anmeldetag: **06.12.88**

(54) **Bremsanlage mit Antiblockier- und Antriebsschlupfregelung.**

(30) Priorität: **14.01.88 DE 3800854**

(43) Veröffentlichungstag der Anmeldung:
**19.07.89 Patentblatt 89/29**

(45) Bekanntmachung des Hinweises auf die
Patenterteilung:
**09.12.92 Patentblatt 92/50**

(84) Benannte Vertragsstaaten:
**DE FR GB IT SE**

(56) Entgegenhaltungen:
**DE-C- 3 127 301**
**US-A- 4 575 161**

(73) Patentinhaber: **ROBERT BOSCH GMBH**
**Postfach 30 02 20**
**W-7000 Stuttgart 30(DE)**

(72) Erfinder: **Friedow, Michael**
**Uracher Weg 9**
**W-7146 Tamm(DE)**
Erfinder: **Van Zanten, Anton, Dr.**
**Waldstrasse 15/2**
**W-7257 Ditzingen-Schöckingen(DE)**

Rank Xerox (UK) Business Services

# Beschreibung

## Stand der Technik

Die Erfindung betrifft eine Bremsanlage mit Antiblockier-und Antriebsschlupfregelung gemäß der Gattung des Hauptanspruchs.

Derartige mit der Antiblockierregelung kombinierte Antriebsschlupfregeleinrichtungen können im Fahrbetrieb ein zum Durchdrehen neigendes Antriebsrad durch zweckgerechte Druckbeaufschlagung seiner Bremse so weit verzögern, daß ein mit guter Fahrstabilität und wirksamen Antriebsmoment-Ausnutzung gleichwohl verträglicher Höchstwert des Schlupfes dieses Antriebsrades nicht oder zumindest nicht nennenswert überschritten wird. Bevorzugtermaßen wird die Rückförderpumpe für die Antiblockierregelung ebenfalls auch zum Fördern der Bremsflüssigkeit zur Antriebsschlupfregelung verwendet.

Eine derartige Bremsanlage ist beispielsweise in der DE-PS 31 37 287 aufgezeigt. Dort besteht die Hilfsdruckquelle für die Antriebsschlupfregelung im wesentlichen aus einem Hochdruckspeicher, über den bei Einschaltung der Antriebsschlupfregelung Bremsflüssigkeit zu der Rückförderpumpe geführt wird. Allerdings bleiben bei dieser Bremsanlage die Bremskreise nicht geschlossen und zudem ist der gesamte Aufbau sehr kompliziert.

## Vorteile der Erfindung

Eine Bremsanlage mit den Merkmalen des Hauptanspruches verwendet dagegen nur eine Vakuumdose zur Zuführung von Bremsflüssigkeit zu der Rückförderpumpe bei Antriebsschlupfregelung. Die Rückförderpumpe ist dabei nicht als selbstansaugende Pumpe ausgeführt. Beim Ansaugen über eine Saugpumpe würden wegen der vielen Drosselstellen, die durch Leitungen und Ventile verursacht werden, schädliche Unterdrücke auftreten, die das Entstehen von Luftblasen (Entgasung) und Dampfblasen begünstigen, was die Leistungsfähigkeit des Bremssystemes je nach Umfang mehr oder minder stark beeinträchtigt. Ebenfalls sind Beschädigungen der Saugpumpe durch Kavitation zu befürchten. Deshalb wird im geschlossenen Bremskreis nur eine Förderpumpe und keine Saugpumpe verwendet.

In der Schaltstellung für die Antriebsschlupfregelung ist das Magnetventil auf Durchlaß für die Bremsflüssigkeit geschaltet. Zum Aufbau eines Bremsdruckes ohne den Hauptbremszylinder muß nun die Rückförderpumpe Bremsflüssigkeit außerhalb des eigentlichen Bremskreises beziehen. Erfindungsgemäß geschieht dies aus dem Druckraum der Vakuumdose, wobei diese Bremsflüssigkeit unter geringem Druck der Pumpe zugeführt wird.

Dabei bleibt der Bremskreis jedoch geschlossen.

Damit die Bremsflüssigkeit unter dem geringen Druck zu der Förderpumpe gelangt, ist es notwendig, die Druckkammer mit einem Kolben zu beaufschlagen. Dieser Kolben steht im Rahmen der Erfindung mit einer Membran in der Vakuumdose in Verbindung, wobei diese Membran zwei Räume voneinander abtrennt. Beide Räume sind im Normalzustand über ein entsprechendes Ventil durch eine Unterdruckpumpe bzw. durch einen Anschluß an ein Motor-Ansaugrohr entlüftet und weisen somit einen Unterdruck auf. Einer dieser Räume kann dann über ein entsprechendes Ventil belüftet werden. Hierdurch vergrößert sich dieser Raum, d. h. die Membran bewegt sich in den entlüfteten Raum hinein. Bei dieser Bewegung nimmt sie den Kolben mit, so daß hierdurch der Druckraum vergrößert wird.

Der Bewegung des Kolbens wirkt eine Feder entgegen, wobei diese Feder als Druck- oder als Zugfeder ausgebildet sein kann. Je nachdem wird sie auch in dem entsprechenden Raum anzuordnen sein.

Damit in dem anderen Raum nicht möglicherweise ein geringer Überdruck entsteht, welcher der Arbeit der Membran entgegenwirkt, kann hier noch zusätzlich ein Rückschlagventil vorgesehen sein, über das auch dieser Raum in dem notwendigen Maße entlüftet wird. Zusätzlich kann über dieses "Vakuumrückschlagventil" das sichere Anstehen eines Unterdruckes gewährleistet werden, auch wenn der Unterdruck durch die bereitstellende Komponente momentan nicht in ausreichendem Maße gewährleistet ist.

Die Druckkammer der Vakuumdose steht, wie oben beschrieben, mit der Rückförderpumpe in Verbindung. In diese Verbindung sollte jedoch ein Magnetventil eingeschaltet sein. In dem ersten Ausführungsbeispiel der Erfindung ist dieses Magnetventil als Umschaltventil ausgebildet. In einer ersten Schaltstellung als Ansaugstellung wird eine Verbindung mit dem Ausgang der Rückförderpumpe hergestellt. In einer zweiten Schaltstellung verbindet es die Druckkammer mit dem Eingang der Rückförderpumpe. Somit gelangt in dieser zweiten Schaltstellung Bremsflüssigkeit aus der Druckkammer zur Rückförderpumpe und kann zum Aufbau eines Bremsdruckes in den entsprechenden Radbremszylindern benutzt werden. In der zweiten Schaltstellung dagegen ist die Druckkammer mit der Bremsleitung verbunden. Ein Druckbegrenzungsventil oder eine Komponente mit Speicherfunktion fangen unzulässig hohe Drücke zwischen den Magnetventilen in der Bremsleitung und dem Umschaltventil ab. Ein erforderliches Zusatzvolumen an Bremsflüssigkeit für den Druckraum der Vakuumdose wird bei diesem Ausführungsbeispiel intern über den Hauptbremszylinder zugeführt.

In dem zweiten gezeigten Ausführungsbeispiel ist das Ventil in der Leitung zu der Rückförderpumpe als ein einfaches Sperrventil ausgebildet, welches den Durchgang entweder öffnet oder schließt. Ein Druckbegrenzungsventil verhindert auch hier die Entstehung unzulässig hoher Drücke im Zweig ausgangsseitig von der Rückförderpumpe.

Das bei diesem Ausführungsbeispiel erforderliche Zusatzvolumen an Bremsflüssigkeit wird hier extern einem entsprechenden Vorratsbehälter entnommen.

Die Vorteile der Erfindung liegen insbesondere darin, daß die Bremskreise bei Antiblockierregelung geschlossen bleiben. Der Aufbau der gesamten Bremsanlage ist sehr einfach und preiswert. Die Vakuumdose benötigt einen relativ kleinen Bauraum und kann beliebig im Motorraum plaziert werden.

Zeichnung

Die Erfindung wird nachfolgend anhand der Zeichnung näher erläutert. Es zeigen:
Figur 1 ein Blockschaltbild einer erfindungsgemäßen Bremsanlage mit im Querschnitt dargestellter Druckdose;
Figur 2 ein weiteres Ausführungsbeispiel einer Bremsanlage gemäß Figur 1 mit im Querschnitt dargestellter Druckdose.

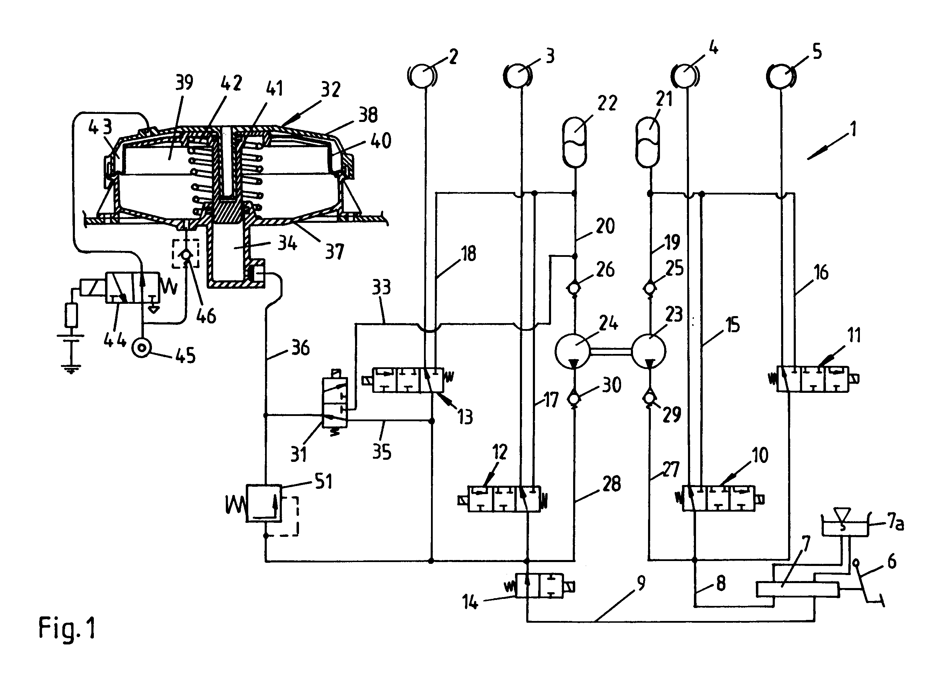

In Figur 1 ist eine Bremsanlage 1 mit sogenannter Schwarz-Weiß-Bremskreisaufteilung aufgezeigt. Diese Bremsanlage 1 besitzt einen Bremskreis für Radbremszylinder von Hinterrädern 2 und 3 sowie einen davon getrennten Bremskreis für Radbremszylinder der Vorderräder 4 und 5. Beiden Bremskreisen ist eine Antiblockierregelung zugeordnet sowie dem Bremskreis für die Hinterräder, welche im vorliegenden Ausführungsbeispiel angetrieben sein sollen, auch eine Antischlupfregelung.

Zur Feststellung des Schlupfes bzw. einer Radblockierung sind den jeweiligen Hinterrädern 2 und 3 bzw. Vorderrädern 4 und 5 entsprechende, nicht dargestellte Raddrehzahlfühler zugeordnet.

Beim Einleiten eines Bremsvorganges wird Bremsdruck über ein Bremspedal 6 auf einen Hauptbremszylinder 7 übertragen. Dieser Hauptbremszylinder 7 besitzt im vorliegenden Ausführungsbeispiel zwei Druckräume, aus denen jeweils eine Bremsleitung 8 und 9 ausmündet. Ferner ist er an einen Vorratsbehälter 7a für Bremsflüssigkeit angeschlossen. Die Bremsleitung 8 steht über ein 3/3-Wege-Magnetventil 10 mit dem Radbremszylinder des Vorderrades 4 sowie über ein entsprechendes Magnetventil 11 mit dem Radbremszylinder des Vorderrades 5 in Verbindung. In der Bremsleitung 9 folgen dagegen entsprechende Magnetventile 12 und 13 zu den Radbremszylindern der Hinterräder 2 und 3 erst nach einem Sperrventil 14.

Bei normalem Bremsvorgang ist dieses Sperrventil offen, so daß Bremsflüssigkeit von dem Hauptbremszylinder 7 durch die Bremsleitung 9 über den Ventilpfad des Sperrventils 14 sowie entsprechende Ventilpfade der Magnetventile 12 und 13 zu den Radbremszylindern der Hinterräder 2 und 3 gelangen kann. Ebenso sind auch die Ventilpfade der Magnetventile 10 und 11 zu den Radbremszylindern der Vorderräder 4 und 5 offen.

Stellt jedoch ein Raddrehzahlfühler ein Blockieren eines der Räder 2, 3, 4 oder 5 fest, so schaltet das diesem Rad in seiner Bremsleitung 8 bzw. 9 zugeordnete Magnetventil 10, 11, 12 oder 13 in eine Sperrstellung um, in welcher die Radbremszylinder von den entsprechenden Bremsleitung 8 bzw. 9 abgekoppelt sind. In diesem Fall wird der in den Radbremszylindern vorhandene Bremsdruck auf gleicher Höhe gehalten.

Soll der in den Radbremszylindern anstehende Bremsdruck abgesenkt werden, so schaltet das Magnetventil 10, 11, 12 bzw. 13 in seine dritte Schaltstellung um, in welcher es den Radbremszylindern des entsprechenden Rades 2, 3, 4 bzw. 5 mit einer Rückführleitung 15, 16, 17 bzw. 18 koppelt. Jeweils zwei Rückführleitungen 15, 16 bzw. 17, 18 münden dann gemeinsam in eine Leitung 19 bzw. 20 zwischen jeweils einem Druckspeicher 21, 22 und einer Rückförderpumpe 23 bzw. 24 vor einem Rückschlagventil 25 bzw. 26. Über jede Rückförderpumpe 23 bzw. 24 wird dann die entsprechende Bremsflüssigkeit in die jeweilige Bremsleitung 8 bzw. 9 vor den Magnetventilen 10, 11, 12 bzw. 13 zurückgefördert, wobei in die entsprechende Rückleitung 27 bzw. 28 noch ein Rückschlagventil 29 bzw. 30 eingeschaltet ist.

Somit handelt es sich im vorliegenden Fall um geschlossene Bremskreise, in denen Bremsflüssigkeit weder zu- noch abgeführt wird. Aus diesem Grunde handelt es sich bei den Rückförderpumpen 23 bzw. 24 auch um nicht selbst ansaugende Pumpen, wobei diese Pumpen erfindungsgemäß auch zur Antriebsschlupfregelung verwendet werden. In diesem Fall schließt das Sperrventil 14 die Bremsleitung 9 zwischen Hauptbremszylinder 7 und den Radbremszylindern der angetriebenen Hinterräder 2 und 3. Ein Magnetventil 31 schaltet in die andere als in Figur 1 gezeigte Schaltstellung um und verbindet damit eine Vakuumdose 32 mit der Leitung 20 zwischen Speicher 22 und Rückschlagventil 26 über eine Druckleitung 33. Damit kann Bremsflüssigkeit aus einem Druckraum 34 der Vakuumdose 32 über das Magnetventil 31 und die Druckleitung 33 in die Leitung 20 eingespeist werden und steht an der Rückförderpumpe 24 an. Diese Bremsflüssigkeit gelangt dann über die Rückleitung 28 in die Bremsleitung 9 und über die in der gezeigten Schaltstellung stehenden Magnetventile 12 und 13 zu den Radbremszylindern der Hinterräder 2 und 3.

Nach Beendigung der Antriebsschlupfregelung schaltet das Magnetventil 31 um, so daß die Rückförderpumpe 24 über die Rückleitung 28 und eine Zweigleitung 35 mit dem Leitungsstück 36 zwischen Magnetventil 31 und Druckraum 34 verbunden ist. Hierdurch kann der Druckraum 34 der Vakuumdose 32 wieder aufgefüllt werden. Damit handelt es sich im vorliegenden Ausführungsbeispiel um sowohl bei Antiblockierregelung wie auch Antriebsschlupfregelung vollkommen geschlossene Bremskreise. Unzulässig hohe Drücke in diesen Leitungen werden von einem Druckbegrenzungsventil 51 aufgefangen.

Der Druckraum 34 ist Teil eines Unterteils 37 der Vakuumdose 32, wobei dieses Unterteil 37 zusammen mit einem Oberteil 38 einen Raum 39 umschließt, in dem sich eine Membran 40 befindet. Gegen diese Membran 40 stützt sich in dem Raum 39 ein Kolben 41 ab, über den der Druckraum 34 mit Druck beaufschlagbar ist. Dabei wird dieser Kolben 41 über eine entsprechende Schraubenfeder 42 in seiner gezeigten Füllstellung gehalten, wobei der Druckraum 34 mit Bremsflüssigkeit gefüllt ist. Um dieses Auffüllen der Druckkammer 34 selbstansaugend auszugestalten, muß der andere, durch die Membran 40 vom Raum 39 getrennte Raum 43 ebenfalls entlüftet werden. Dies geschieht über ein weiteres Magnetventil 44, welches den Raum 43 mit einem Motor-Ansaugrohr 45 bzw. eine Unterdruckpumpe verbindet, wobei in dem vorliegenden Ausführungsbeispiel auch der Raum 39 über ein Rückschlagventil 46 mit der Verbindung zwischen Motor-Ansaugrohr 45 und Magnetventil 44 verbunden ist. Bei Antriebsschlupfregelung ist dieses Magnetventil 44 umgeschaltet, so daß der Raum 43 belüftet werden kann. Der im Raum 39 verbliebene Unterdruck bewirkt dann ein Zurückführen der Membran 40, wobei diese den Kolben 41 mitnimmt und so ein Druck auf die Bremsflüssigkeit in dem Druckraum 34 ausgeübt wird.

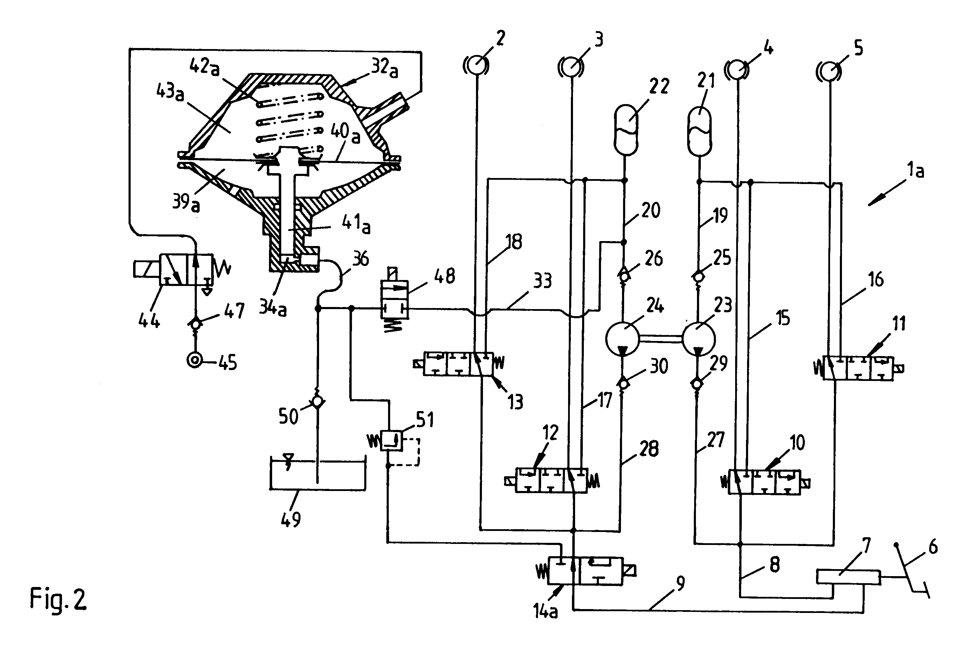

Das Ausführungsbeispiel einer erfindungsgemäßen Bremsanlage 1a gemäß Figur 2 unterscheidet sich von demjenigen nach Figur 1 vor allem bezüglich der Ausbildung der Vakuumdose 32a. Die Membran 40a befindet sich in einer Mittelstellung, in welcher der Druckraum 34a fast vollständig entleert ist. Wird nun der Raum 43a über das Magnetventil 44 und ggfs. ein Rückschlagventil 47 durch die Motor-Ansaugung entlüftet, so bewegt sich die Membran 40a gegen den Druck der Schraubenfeder 42a nach oben und nimmt den Kolben 41a mit. Gleichzeitig befindet sich ein Magnetventil 48 in der in Figur 2 gezeigten Schaltstellung. Auf diese Weise wird Bremsflüssigkeit aus einem Vorratsbehälter 49 über ein Rückschlagventil 50 angesaugt.

Beim normalen Bremsvorgang ist die Vakuumdose 32a durch das Ventil 14a von der Bremsleitung 9 abgekoppelt. Dieses Ventil 14a ist ein 3/2-Ventil, welches wahlweise den Ausgang der Rückförderpumpe 24 mit dem Hauptbremszylinder 7 oder der Druckkammer 34a verbindet. Auch in letztgenannte Verbindung kann noch ein Druckbegrenzungsventil 51 eingeschaltet sein.

**Patentansprüche**

1. Bremsanlage mit Antiblockier- und Antriebsschlupfregelung mit einem von einem Bremspedal mit Bremsdruck beaufschlagbaren Hauptbremszylinder und zumindest einer Bremsleitung zu entsprechenden Radbremszylindern, wobei in die jeweilige Bremsleitung ein Ventil eingeschaltet ist, über welches der an dieser Bremsleitung angeschlossene Radbremszylinder über eine Rückförderpumpe mit der Bremsleitung verbindbar ist, dadurch gekennzeichnet, daß vor der Rückförderpumpe (23,24) eine Druckleitung (33) zu einer Druckkammer (34) einer Vakuumdose (32) abzweigt, über die Bremsflüssigkeit aus der Druckkammer (34) zur Rückförderpumpe (23,24) zuführbar ist.

2. Bremsanlage nach Anspruch 1, dadurch gekennzeichnet, daß die Druckkammer (34) von einem Kolben (41) beaufschlagt ist, welcher mit einer Membrane (40) in Verbindung steht, die zwei Räume (39 und 43) in der Vakuumdose (32) abteilt.

3. Bremsanlage nach Anspruch 2, dadurch gekennzeichnet, daß der Raum (43) über ein Magnetventil (44) mit einem Motor-Ansaugrohr (45) oder einer Unterdruckpumpe zum Erzeugen eines Unterdruckes in dem Raum (43) in Verbindung steht.

4. Bremsanlage nach Anspruch 3, dadurch gekennzeichnet, daß in dem Raum (43a) eine Feder (42a) zur Beaufschlagung des Kolbens (41a) angeordnet ist.

5. Bremsanlage nach Anspruch 3, dadurch gekennzeichnet, daß im Raum (39) eine Feder (42) zur Bewegungsbeeinflussung des Kolbens (41) vorgesehen ist.

6. Bremsanlage nach Anspruch 5, dadurch gekennzeichnet, daß der Raum (39) über ein Rückschlagventil (46) mit dem Motor-Ansaugrohr (45) verbunden ist.

7. Bremsanlage nach wenigstens einem der Ansprüche 1 bis 6, dadurch gekennzeichnet, daß in die Druckleitung (33) ein Magnetventil (31,48) eingeschaltet ist.

8. Bremsanlage nach Anspruch 7, dadurch gekennzeichnet, daß über das Magnetventil (31) in einer ersten Schaltstellung die Druckkammer (34) von dem Eingang der Rückförderpumpe (24) getrennt und mit der Leitung (28) verbunden ist und in einer zweiten Schaltstellung die Druckkammer (34) mit der Rückförderpumpe (24) eingangsseitig verbindet und die Druckkammer (34) von der Leitung (28) trennt.

9. Bremsanlage nach Anspruch 8, dadurch gekennzeichnet, daß in die Bremsleitung (9) zwischen die Verbindung zur Rückförderpumpe (24) bzw. zum Magnetventil (31) und dem Hauptbremszylinder (7) ein Sperrventil (14) eingeschaltet ist, welches in einer ersten Schaltstellung einen Durchflußpfad für Bremsflüssigkeit aus dem Hauptbremszylinder (7) öffnet und in einer zweiten Schaltstellung schließt.

10. Bremsanlage nach Anspruch 7, dadurch gekennzeichnet, daß über das Magnetventil (48) in einer ersten Schaltstellung die Druckleitung (33) zwischen Rückförderpumpe (24) und Druckkammer (34a) geschlossen und in einer zweiten Schaltstellung geöffnet ist.

11. Bremsanlage nach Anspruch 10, dadurch gekennzeichnet, daß der Ausgang (30) der Rückförderpumpe (24) über ein Ventil (14a) und ein Druckbegrenzungsventil (51) mit der Druckkammer (34a) verbunden ist.

12. Bremsanlage nach wenigstens einem der Ansprüche 7 bis 11, dadurch gekennzeichnet, daß die Druckkammer (34,34a) eine Verbindung zu einem Vorratsbehälter (7a,49) ggfs. über ein Rückschlagventil (50) aufweist.

## Claims

1. Brake system with anti-lock control and drive slip control having a main brake cylinder subjected to brake pressure by a brake pedal and at least one brake line to corresponding wheel brake cylinders, the respective brake line having connected into it a valve by means of which the wheel brake cylinder connected to this brake line can be connected to the brake line via a return pump, characterised in that a pressure line (33) branches off before the return pump (23, 24) to a pressure chamber (34) of a vacuum unit (32) by means of which brake fluid can be supplied from the pressure chamber (34) to the return pump (23, 24).

2. Brake system according to Claim 1, characterised in that the pressure chamber (34) is acted upon by a piston (41) which is connected to a diaphragm (40) separating two spaces (39 and 43) in the vacuum unit (32).

3. Brake system according to Claim 2, characterised in that the space (43) is connected via a solenoid valve (44) to an engine induction line (45) or a vacuum pump for generating a vacuum in the space (43).

4. Brake system according to Claim 3, characterised in that a spring (42a) for acting on the piston (41a) is located in the space (43a).

5. Brake system according to Claim 3, characterised in that a spring (42) is provided in the space (39) to influence the motion of the piston (41).

6. Brake system according to Claim 5, characterised in that the space (39) is connected to the engine induction line (45) via a non-return valve (46).

7. Brake system according to at least one of Claims 1 to 6, characterised in that a solenoid valve (31, 48) is connected into the pressure line (33).

8. Brake system according to Claim 7, characterised in that the pressure chamber (34) is separated from the inlet to the return pump (24) and is connected to the line (28) by means of the solenoid valve (31) in a first position and, in a second position, connects the pressure chamber (34) to the return pump (24) on the inlet end and separates the pressure chamber (34) from the line (28) (sic).

9. Brake system according to Claim 8, characterised in that a shut-off valve (14) is connected into the brake line (9) between the connection to the return pump (24) or to the solenoid valve (31) and the main brake cylinder (7), which shut-off valve (14) opens a through-flow path for brake fluid from the main brake cylinder (7) in a first position and closes it in a second position.

10. Brake system according to Claim 7, characterised in that the pressure line (33) between return pump (24) and pressure chamber (34a) is closed by means of the solenoid valve (48) in a first position and is opened by it in a second position.

11. Brake system according to Claim 10, characterised in that the outlet (30) of the return pump (24) is connected to the pressure chamber (34a) via a valve (14a) and a pressure limiting valve (51).

12. Brake system according to at least one of Claims 7 to 11, characterised in that the pressure chamber (34, 34a) has a connection to a fluid reservoir (7a, 49), if appropriate via a non-return valve (50).

**Revendications**

1. Installation de freinage avec régulation d'antiblocage et régulation de glissement d'entraînement avec un maître cylindre de freinage soumis à une pression de freinage par une pédale de freinage et au moins une canalisation de freinage allant aux cylindres de freinage de roues correspondants, dans laquelle est montée une soupape dans la canalisation de freinage correspondante, par l'intermédiaire de laquelle le cylindre de freinage de roue raccordé à cette canalisation de freinage peut être relié par l'intermédiaire d'une pompe de refoulement à la canalisation de freinage, installation de freinage caractérisée en ce qu'avant la pompe de refoulement (23, 24) part en dérivation une conduite sous pression (33) vers une chambre de pression (34) d'une boîte sous vide (32), via laquelle du liquide de freinage, peut être envoyé à partir de la chambre de pression (34) à la pompe de refoulement (23, 24).

2. Installation de freinage selon la revendication 1, caractérisée en ce que la chambre de pression (34) est actionnée par un piston (41), qui est en liaison avec une membrane (40), qui sépare deux espaces (39, 43) dans la boîte sous vide (32).

3. Installation de freinage selon la revendication 2, caractérisée en ce que l'espace (43) est en liaison via une électrovanne (44) avec une pipe d'admission de moteur (45) ou une pompe à dépression pour produire une dépression dans l'espace (43).

4. Installation de freinage selon la revendication 3, caractérisée en ce que dans l'espace (43) est disposé un ressort (42a) pour agir sur le piston (41a).

5. Installation de freinage selon la revendication 3, caractérisée en ce que dans l'espace (39) est prévu un ressort (42) pour agir sur le mouvement du piston (41).

6. Installation de freinage selon la revendication 5, caractérisée en ce que l'espace (39) est relié via un clapet de non retour (46) à la pipe d'admission du moteur (45).

7. Installation de freinage selon au moins l'une des revendications 1 à 6, caractérisée en ce que dans la canalisation sous pression (33) est montée une électrovanne (31, 48).

8. Installation de freinage selon la revendication 7, caractérisée en ce que via l'électrovanne (31) dans une première position de commutation la chambre de pression (34) est séparée de l'entrée de la pompe de refoulement (24) et est reliée à la canalisation (28) et relie dans une deuxième position de commutation la chambre de pression (34) à la pompe de refoulement (24) du côté de l'entrée et sépare la chambre de pression (34) de la canalisation (28).

9. Installation de freinage selon la revendication 8, caractérisée en ce que dans la canalisation de freinage (9) est montée entre la liaison avec la pompe de refoulement (24) ou l'électrovanne (31) et le maître cylindre de freinage (7) une soupape d'arrêt (14), qui dans une première position de commutation ouvre un chemin d'écoulement pour le liquide de passage à partir du maître cylindre de freinage (7) et le ferme dans une deuxième position de commutation.

10. Installation de freinage selon la revendication 7, caractérisée en ce que la canalisation sous pression (33) via l'électrovanne (48) est ouverte dans une première position de commutation entre la pompe de refoulement (24) et la chambre de pression (34a) et est ouverte dans une deuxième position de commutation.

11. Installation de freinage selon la revendication 10, caractérisée en ce que la sortie (30) de la pompe de refoulement (24) est reliée via une soupape (14a) et une soupape de limitation de pression (51) à la chambre de pression (34a).

12. Installation de pression selon au moins l'une des revendications 7 à 11, caractérisée en ce que la chambre de pression (34, 34a) présente une liaison allant à un réservoir (7a, 49) le cas échéant via un clapet de non retour (50).

Fig.1

EP 0 324 103 B1

Fig. 2

EP 0 324 103 B1